# EUROPÄISCHE PATENTSCHRIFT

(11) **EP 0 783 955 B1**
(45) Veröffentlichungstag und Bekanntmachung des Hinweises auf die Patenterteilung: **15.03.2000**
(21) Anmeldenummer: 96116299.7
(22) Anmeldetag: 11.10.1996
(51) Int. Cl.: B29C 45/66, B29C 45/17

(54) **Zwei-Platten-Spritzgiessmaschine mit einer beweglichen und einer feststehenden Formaufspannplatte**
Two-plate injection moulding machine with a movable plate and a fixed plate
Machine de moulage par injection à deux plateaux avec un plateau mobile et un plateau fixe

(30) Priorität: 09.01.1996 DE 19600461
(43) Veröffentlichungstag der Anmeldung: 16.07.1997
(73) Patentinhaber: Ferromatik Milacron Maschinenbau GmbH, D-79364 Malterdingen (DE)
(72) Erfinder: Jaroschek, Christoph, Dr.-Ing., 79346 Endingen (DE); Späth, Wolfgang, 77962 Ottenheim (DE); Westphal, Friedrich, 79361 Sasbach (DE)
(74) Vertreter: Röther, Peter, Dipl.-Phys.

(56) Entgegenhaltungen:
- WO-A-94/17977
- DE-A- 4 329 070
- FR-A- 2 665 105
- US-A- 4 281 977
- PATENT ABSTRACTS OF JAPAN vol. 014, no. 081 (M-0935), 15.Februar 1990 & JP 01 295815 A (FANUC LTD), 29.November 1989,

## Beschreibung

Die Erfindung betrifft eine Zwei-Platten-Spritzgießmaschine gemäß dem Oberbegriff des Patentanspruchs 1.

Bei den bisher üblichen Spritzgießmaschinen ist die feststehende Formaufspannplatte, auch Düsenplatte genannt, über Holme in den vier Eckbereichen dieser Platte mit einer Endplatte, die ebenfalls feststeht, verbunden. Die Holme dienen darüber hinaus als Führung für eine bewegbare Formaufspannplatte, welche mit Hilfe eines sich an der Endplatte abstützenden Antriebsmechanismus relativ zur feststehenden Formaufspannplatte verfahren wird. Die Holme zusammen mit der feststehenden Formaufspannplatte und der Endplatte bilden einen geschlossenen Kraftkreislauf, wodurch zum einen eine gute Führung der verfahrbaren Formaufspannplatte, insbesondere aber eine exakte Plattenparallelität beim Formschluß gewährleistet ist. Nachteil derartiger Maschinen ist, daß durch die störenden Holme im Bereich des Werkzeugeinbauraumes Schwierigkeiten auftreten beim Ausbau bzw. Wechsel eines Werkzeugs, insbesondere eines großformatigen Werkzeuges, bei dem nach außen abstehende Druckmittelzylinder zur Betätigung von Schiebern etc. vorgesehen sind.

Um den Einbauraum frei zugänglich zu gestalten, sind daher in den letzten Jahren mehr und mehr holmlose Spritzgießmaschinen entwickelt worden. Dabei dient zur Aufnahme der beim Schließkraftaufbau auftretenden Kräfte in der Regel ein C-förmiger Rahmen, dessen C-Schenkel die oben angesprochenen feststehenden Formaufspannplatten bzw. Endplatten tragen. Infolge des Fehlens der die Platten miteinander verbindenden Holme tritt beim Schließkraftaufbau eine Durchbiegung des die beiden C-Schenkel verbindenden Teils des C-Rahmens nach oben auf, wodurch die C-Schenkel schräg nach außen wegbewegt werden und somit die Plattenparallelität nicht mehr gegeben ist. Es sind im Stand der Technik bereits einige Lösungsansätze zur Kompensation derartiger Aufbiegungen vorgeschlagen worden, so insbesondere in Form von an den C-Schenkeln lediglich angelenkten Formaufspannplatten, welche unabhängig vom C-Rahmen geführt sind. In jedem Fall ist ein relativ großer Aufwand zu treiben, um die nachteiligen Effekte auszuschalten. Ein weiterer Nachteil derartiger Maschinen ist die große Baulänge und das durch den stabil ausgeführten C-Rahmen bedingte hohe Gewicht der Maschinen.

Aus diesem Grunde ist im Stand der Technik auch bereits vorgeschlagen worden, holmlose Zwei-Platten-Spritzgießmaschinen zu realisieren. Eine derartig ausgestaltete Maschine ist beispielsweise aus der WO 94/17977, insbesondere Fig. 7, bekannt. Ein Hauptnachteil dieser Maschine liegt in der vollständig hydraulisch ausgestalteten Vorrichtung zur Kompensation der Rahmenverformung. Hydraulische Systeme sind trotz der relativen Inkompressibilität des Hydrauliköls in sich elastisch, so daß schon eine große Kraft im Kompensationszylinder aufzubringen ist, um die Verformung zu verhindern bzw. ausreichend klein zu halten. Somit muß auch dieser Zylinder verhältnismäßig groß dimensioniert sein.

Die Erfindung geht aus von einer Maschine, wie sie in der Patentanmeldung 195 39 752.5 beschrieben ist. Bei dieser Maschine werden die beiden Formaufspannplatten mit Hilfe eines Zahnstangenantriebs relativ zueinander bewegt. Ein weiterer Antrieb fährt Keile zwischen den Kopf der beide Platten durchsetzenden Zugstangen und die zugehörige bewegliche Formaufspannplatte, wenn das Formwerkzeug geschlossen ist, wodurch die erforderliche Schließkraft aufgebracht wird. Zur zusätzlichen Schließkraftaufbringung ist auf der Einspritzseite ein Hydraulikkissensystem vorgesehen. Zur Gewährleistung der Plattenparallelität und des damit angestrebten guten Formschlusses beim Schließkraftaufbau sind unterhalb der Zugstangen zwischen den Platten Druckstangen vorgesehen, die das beim Zuhalten des Formwerkzeugs auftretende Drehmoment im oberen Plattenbereich ausgleichen und somit die drohende Auseinanderspreizung der Platten verhindern.

Obwohl eine derartige technische Lösung auf der Hand liegende Vorteile aufweist, wie die geringe Baulänge der Maschine, die freie Zugänglichkeit zum Werkzeugeinbauraum ohne störende Holme, den klein dimensionierten Antrieb für die Verfahrbewegung der Platte, der Beschränkung des Einsatzes von Hydraulik auf ein Minimum, ist nachteilig an ihr der relativ große technische Aufwand, der sich durch die Entkopplung der Antriebe für Verfahrbewegung und Schließkraftaufbau ergibt.

Weiter hat sich als nachteilig herausgestellt, daß die Verspannung durch die Keile zu Problemen beim Öffnungsvorgang der Form nach der Formlingsherstellung führt.

Der Erfindung liegt daher die Aufgabe zugrunde, eine Spritzgießmaschine der eingangs genannten Art so auszubilden, daß unter Beibehaltung der genannten Vorteile einer Zwei-Platten-Spritzgießmaschine der Antrieb sowohl für die Schließbewegung als auch für den Schließkraftaufbau konstruktiv einfach aufgebaut ist und sich die Maschine schnell und unaufwendig auf verschiedene Formhöhen einstellen läßt.

Die Erfindung löst diese Aufgabe mit Hilfe der Merkmale des kennzeichnenden Teils des Patentanspruchs 1.

Vorteilhafte Ausführungsformen und Weiterbildungen der Erfindung sind Gegenstand der Unteransprüche.

Es handelt sich bei der erfindungsgemäßen Maschine somit um eine Zwei-Platten-Spritzgießmaschine, bei der dadurch, daß das Antriebssystem für die Verschiebebewegung der Formaufspannplatte und die Aufbringung der Schließkraft horizontal auf der Einspritzseite angeordnet ist, daher unterhalb der Einspritzeinheit positioniert werden kann, so daß die Baulänge auf ein Mindestmaß reduziert ist ähnlich wie bei der oben beschriebenen Maschine.

Im Gegensatz hierzu treten jedoch die dieser Maschine anhängenden Nachteile nicht in Erscheinung, da lediglich ein Antrieb für Verfahrbewegung und Schließkraftaufbau vorhanden ist, was die Konstruktion vereinfacht und wodurch eine Erhöhung der Öffnungskraft erzielt wird sowie eine unproblematische Formwerkzeugsöffnung überhaupt.

Ein weiterer großer Vorteil ist der komplett saubere Werkzeugbereich ohne jegliche Schmierung und Hydraulik.

Darüber hinaus ist durch das Konzept, den Antrieb auf die Einspritzseite zu verlegen, ohne dort die Einspritzeinheit zu stören, ein großer Freiraum für die Auswerfereinheit auf der der Einspritzseite entgegengesetzten Seite der Maschine vorhanden.

Bei bisher üblichen Zwei-Platten-Spritzgießmaschinen ist dies nicht der Fall, da entweder der Antrieb ebenfalls auf dieser Seite angeordnet werden muß, weil er auf der Einspritzseite mit der Einspritzeinheit in Konflikt käme oder hinter diese angeordnet werden müßte, was die Baulänge der Maschine vergrößerte.

Aber auch bei der Vorrichtung, von der die Erfindung ausgeht, ist der Konstrukteur durch das Vorhandensein der Keilantriebe und der Keile selbst für die Auswerferei auf einen eng begrenzten Raum beschränkt.

Durch das zusätzliche Merkmal, daß das Joch relativ zu den Zugstangen in deren axialer Richtung verstellbar ist, bietet das erfindungsgemäße Konzept den weiteren Vorteil, daß auf einfache Weise einerseits schnell eine Werkzeughöhenverstellung bei Umrüstung auf andere Werkzeuge vorgenommen werden kann und andererseits die Schließkraft an die jeweiligen Erfordernisse angepaßt werden kann.

Das Merkmal des Patentanspruchs 2 bietet hierfür eine besonders vorteilhafte, da einfache Lösungsmöglichkeit.

Die als Spindeln ausgebildeten Zugstangen selbst bewirken die Verstellung der Jochposition. Dadurch wird entweder der Abstand des Jochs von der feststehenden Formaufspannplatte bei gleichbleibender Werkzeughöhe variiert, wodurch sich eine Veränderung der Schließkraftcharakteristik ergibt, oder bei gleichem Abstand zwischen Joch und Formaufspannplatte wird die Formhöhe verstellt, oder aber es können geeignete Kombinationen realisiert werden.

Um bei veränderten Formwerkzeughöhen auch die Druckstangen schnell auf die aktuellen Gegebenheiten einstellen zu können, schlägt der Anspruch vor, auch diese in an sich bekannter Weise als Spindeln auszuführen, wodurch die wirksame Länge derselben zwischen den Platten einfach eingestellt werden kann.

Die Verdrehung sowohl der Zugstangen als auch der Druckstangen erfolgt gemäß Anspruch 4 synchron, wobei daran gedacht ist, alle Stangen über einen gemeinsamen Antrieb synchron zu verdrehen oder aber für jedes Stangenpaar einen derartigen Antrieb vorzusehen, was dann von Vorteil ist, wenn lediglich die Schließkraftcharakteristik, nicht aber die Werkzeughöhe verändert werden soll, bzw. wenn die unter Temperatureinfluß stattfindende Formwerkzeugausdehnung berücksichtigt werden muß.

Eine einfache vorteilhafte konstruktive Lösung besteht gemäß Anspruch 5 darin, die Stangen mittels eines Kettenantriebs zu verdrehen, wobei die Kette/n über an den Stangenenden angeordneten Ritzeln läuft/laufen .

Zum Betrieb des Kettenantriebs sind dem Fachmann verschiedene Möglichkeiten gegeben und an sich bekannt. Erfindungsgemäß wird als eine besonders geeignete, da saubere Möglichkeit der Einsatz eines elektrischen Stellmotors (Patentanspruch 6) angesehen.

Als Antriebsorgan wird bei einer bevorzugten Ausführungsform der Erfindung gemäß Patentanspruch 7 ein Doppelkniehebel verwendet, der sich einerseits am Joch und andererseits an der diesem gegenüberliegenden Formaufspannplatte, in der Regel der feststehenden Formaufspannplatte, abstützt.

Die Anordnung der horizontal liegenden Kniehebel auf der Einspritzaggregatseite der Maschine vereint die Vorteile bekannter Kniehebelmaschinen (bei denen allerdings der Kniehebelantrieb auf der der Einspritzseite abgewandten Maschine angeordnet ist), nämlich
- die hohe Steifigkeit,
- die durch die einfache erzwungene Linearbewegung ermöglichte Fahrbewegung mit an den Schließvorgang angepaßter Kinematik,
- den Schließkraftaufbau und die erhöhte Öffnungskraft
mit den Vorteilen der Zwei-Platten-Maschine, insbesondere - wie oben bereits ausgeführt - die kurze Bauweise.

Zum Antrieb der Kniehebelmechanik kennt der Fachmann diverse Möglichkeiten. Bevorzugterweise wird erfindungsgemäß eine elektromorisch angetriebene Spindel eingesetzt (Patentanspruch 8) oder alternativ ein Druckmittelzylinder (Patentanspruch 9).

Bei einer weiteren Ausführungsform der Erfindung ist gemäß Patentanspruch 10 als Antriebsorgan ein Kurbeltrieb vorgesehen, der ebenfalls wie der Kniehebel elektromotorisch mit einem dazwischengeschalteten geeigneten Getriebe angetrieben werden kann.

Beide Alternativen haben den Vorteil, daß eine genau definierte Steuerung realisierbar ist und daß darüber hinaus die durch den Einsatz von Druckmittel entstehenden Probleme ausgeschlossen sind.

Trotzdem ist die Erfindung hierauf nicht beschränkt und es kann - wie in Patentanspruch 11 vorgeschlagen - bei einer dritten Ausführungsform der Erfindung vorgesehen sein, als Antriebsorgan mindestens einen - bevorzugterweise zwei - Druckmittelzylinder (Patentanspruch 12) einzusetzen, der/die sich einerseits am Joch, andererseits an der Formaufspannplatte abstützt (abstützen), wobei natürlich auch an einen elektrohydraulischen Antrieb gedacht werden kann.

Die Erfindung wird im folgenden anhand mehrerer Ausführungsbeispiele dargestellt und erläutert.

Es zeigen:
- Fig. 1:: schematisiert (unter Weglassung aller für die Erfindung unwesentlichen Elemente) eine kniehebelgetriebene Zwei-Platten-Spritzgießmaschine in Seitenansicht,
- Fig. 2:: die Antriebsseite gemäß Fig. 1 in Draufsicht,
- Fig. 3:: eine zweite alternative Ausführungsform mit einem Kurbeltrieb als Antriebsorgan,
- Fig. 4:: eine dritte alternative Ausführungsform mit einem Druckmittelzylinderpaar als Antriebsorgan.

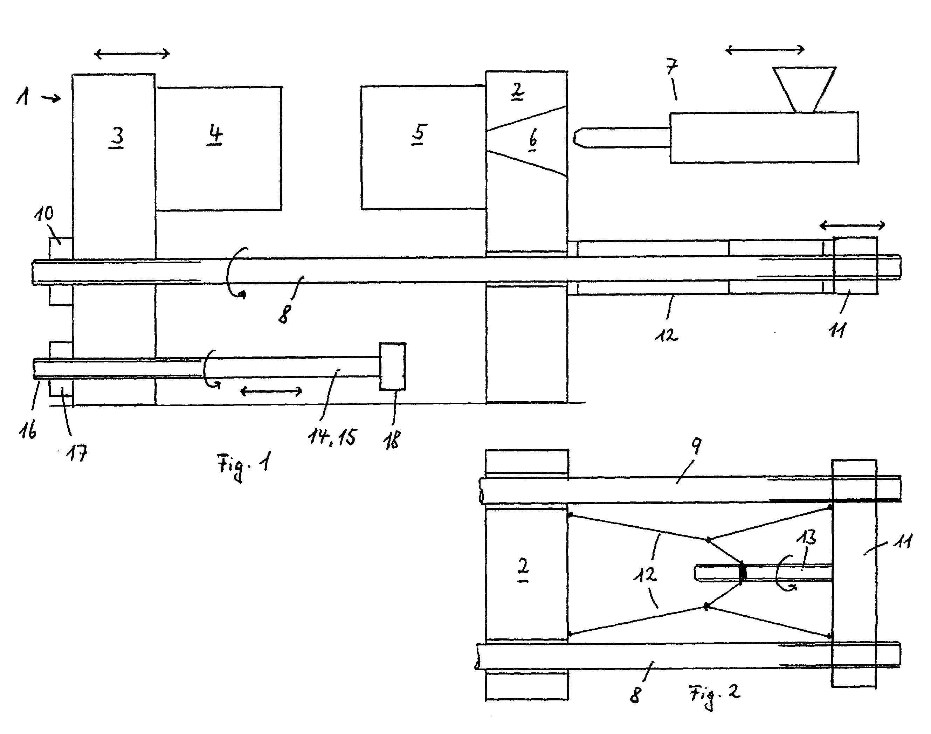

In der Fig. 1 ist eine holmlose Zwei-Platten-Spritzgießmaschine dargestellt und allgemein mit dem Bezugszeichen 1 versehen.

An einem nicht dargestellten Maschinenbett ist eine feststehende Formaufspannplatte 2 und eine auf einer ebenfalls nicht dargestellten Führung verfahrbare Formaufspannplatte 3 angeordnet, die jeweils eine Formwerkzeughälfte 4 und 5 tragen. Die feststehende Formaufspannplatte 2 weist eine Durchtrittsöffnung 6 für die Düse eines Einspritzaggregats 7 auf.

Unterhalb des Formwerkzeugeinbauraumes 4, 5 verlaufen die Formaufspannplatten 2 und 3 durchsetzend zwei parallel in einer horizontalen Ebene angeordnete Zugstangen 8 und 9, wobei die Formaufspannplatte 2 frei durchsetzt wird, während das die Platte 3 durchsetzende Ende in Form einer Spindel ausgebildet ist, deren Gewinde mit einem Innengewinde in der Platte zusammenwirkt. Zum Verdrehen der Zugstange 8,9 befindet sich auf dieser ein Ritzel 10, das von einem nicht dargestellten Kettenantrieb beaufschlagt wird.

Durch die Formaufspannplatte 2 hindurch ragen die Zugstangen 8 und 9 unterhalb des Einspritzaggregats 7 vor und durchsetzen ein Joch 11, das eine Querverbindung der Zugstangen 8 und 9 bildet.

Die Aufnahmeöffnungen des Jochs 11 für die Zugstangen 8 und 9 sind mit einem Innengewinde versehen, in dem das Außengewinde der in diesem Bereich ebenfalls als Spindeln ausgebildeten Zugstangen 8 und 9 läuft.

Wie Fig. 2 zeigt ist zwischen Joch 11 und feststehender Formaufspannplatte 2 ein Doppelkniehebelgetriebe 12 angeordnet, wobei die Kniehebel eine Ebene aufspannen, die in der durch die Zugstangen 8 und 9 und das Joch 11 aufgespannten Ebene liegt.

Der Doppelkniehebel ist einerseits am Joch 11 und andererseits an der Formaufspannplatte 2 angelenkt.

Angetrieben wird der Doppelkniehebel 12 mittels einer schematisch dargestellten, beispielsweise mit einem Elektromotor betätigbaren Spindel 13. Er kann allerdings auch mittels Druckmittelzylinder betätigt werden.

Unterhalb der Zugstangen 8 und 9 sind zwei parallel zueinander angeordnete Druckstangen 14 und 15 vorgesehen, deren freie Enden 16 die bewegliche Formaufspannplatte 3 durchsetzen und in diesem Bereich ebenfalls als Spindeln ausgebildet sind. Die entgegengesetzten Enden 18 der Druckstangen 14 und 15 sind aufgeweitet und stützen sich bei geschlossenem Formwerkzeug 4 und 5 an der feststehenden Formaufspannplatte 2 ab.

Über einen zweiten - ebenfalls nicht dargestellten - Kettenantrieb werden die Druckstangen verdreht. Als Übertragungselement dient - wie bei den Zugstangen - jeweils ein Ritzel 17.

Durch Verdrehen der Ritzel 17 wird die wirksame Länge der Druckstangen 14 und 15 zur Werkzeughöheneinstellung verändert. Gleichzeitig kann so auf die unter Temperatureinfluß auftretende Formausdehnung reagiert werden.

Ein gleichartiger Kettenantrieb wirkt auf die Ritzel 10 der Zugstangenenden, wodurch die Zugstangen 8 und 9 um ihre Längsachse verdreht werden, was dazu führt, daß sich das Joch relativ zu den Zugstangen 8 und 9 bewegt bzw. die Formaufspannplatte 3 zur Einstellung der gewünschten Werkzeughöhe.

Hierdurch kann zum einen eine Werkzeughöheneinstellung bzw. - verstellung und zum anderen bei beibehaltener Werkzeughöhe die Charakteristik der durch den Kniehebelantrieb erzeugten Schließkraft verändert werden.

Der Kniehebelantrieb 12 dient somit über die Zugstangen 8 und 9 zum Verfahren der beweglichen Formaufspannplatte und nach dem Schließvorgang zum Erzeugen der erforderlichen Schließkraft, wobei die Druckstange 14 und 15 der drohenden Auseinanderspreizung der oberen Plattenbereiche entgegenwirken und so die Plattenparallelität und damit guten Formfluß gewährleisten.

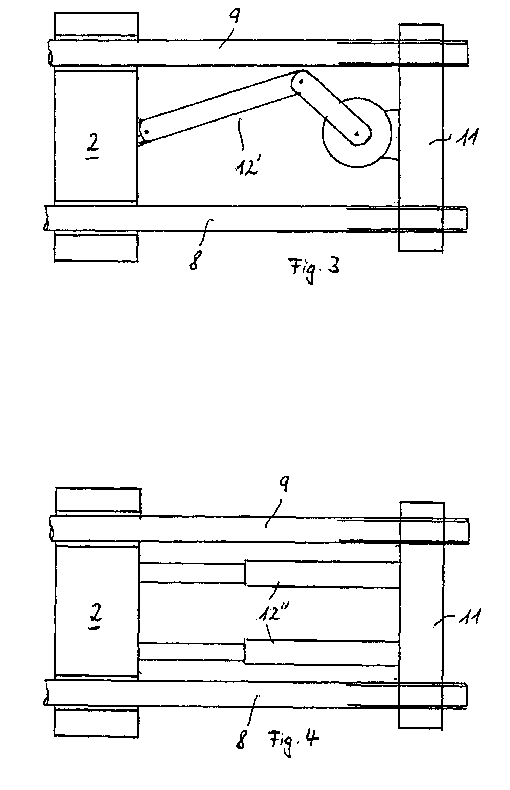

Die.Fig. 3 zeigt eine alternative Antriebsvorrichtung. Hier ist statt des Kniehebelantriebs zwischen dem Joch 11 und der feststehenden Formaufspannplatte 2 ein Kurbeltrieb 12' angeordnet.

Dieser Kurbeltrieb 12' wird von einem Elektromotor unter Zwischenschaltung eines geeigneten Getriebes betätigt.

Die Fig. 4 zeigt eine weitere alternative Antriebsanordnung. Hierbei ist zwischen Joch 11 und feststehender Formaufspannplatte ein Druckmittelzylinderpaar 12" angeordnet.

## Patentansprüche

1. Zwei-Platten-Spritzgießmaschine (1) mit einer beweglichen und einer feststehenden Formaufspannplatte (3,2), einem Antrieb für die Schließbewegung und die Aufbringung der erforderlichen Schließkraft, mit zwei in einer horizontalen Ebene parallel zueinander unterhalb des Werkzeugeinbauraums angeordneten Zugstangen (8,9), die die Formaufspannplatten (2,3) durchsetzen und denen eine der Platten als Angriffspunkt für die Übertragung der Zugkraft dient, sowie zwei unterhalb der Zugstangen zwischen den Platten angeordneten Druckstangen (14,15),
dadurch gekennzeichnet,
daß der Antrieb auf der Einspritzseite der Maschine (1) angeordnet ist und ein die Zugstangenenden führendes und miteinander verbindendes Joch (11) aufweist, das als Widerlager für mindestens ein innerhalb der durch die Zugstangen (8,9) und das Joch (11) aufgespannten Ebene angeordnetes und wirkendes, an der benachbarten Formaufspannplatte (2) angreifendes Antriebsorgan (12,12',12") dient, wobei das Joch (11) relativ zu den Zugstangen (8,9) in deren axialer Richtung verstellbar ist.

2. Zwei-Platten-Spritzgießmaschine nach Anspruch 1,
dadurch gekennzeichnet,
daß die Zugstangen (8,9) mindestens an ihren jochseitigen Enden als Spindeln ausgebildet sind und die Stangendurchführungen im Joch (11) als Gewindemuttern für die Spindeln dienen.

3. Zwei-Platten-Spritzgießmaschine nach Anspruch 1 oder 2,
dadurch gekennzeichnet,
daß die Druckstangen (14,15) mit einem ihrer Enden (16) eine der Formaufspannplatten (3) durchsetzen, wobei diese Enden (16) als Spindeln ausgebildet sind und an dieser Formaufspannplatte (3) Gewindemuttern (17) für die als Spindeln ausgebildeten Enden (16) der Stangen (14,15) vorgesehen sind.

4. Zwei-Platten-Spritzgießmaschine nach einem der Ansprüche 1 bis 3,
dadurch gekennzeichnet,
daß sowohl die Zugstangen (8,9) als auch die Druckstangen (14,15) jeweils synchron zueinander um ihre Längsachse verdrehbar sind.

5. Zwei-Platten-Spritzgießmaschine nach Anspruch 4,
dadurch gekennzeichnet,
daß jedes Stangenpaar (8,9,14,15) über einen Kettenantrieb verdrehbar ist.

6. Zwei-Platten-Spritzgießmaschine nach Anspruch 5,
dadurch gekennzeichnet,
daß der Kettenantrieb mittels eines elektrischen Stellmotors betreibbar ist.

7. Zwei-Platten-Spritzgießmaschine nach einem der Ansprüche 1 bis 6,
dadurch gekennzeichnet,
daß das Antriebsorgan ein Doppelkniehebel (12) ist.

8. Zwei-Platten-Spritzgießmaschine nach Anspruch 7,
dadurch gekennzeichnet,
daß zum Betrieb des Kniehebels eine elektromotorisch angetriebene Spindel (13) dient.

9. Zwei-Platten-Spritzgießmaschine nach Anspruch 7,
dadurch gekennzeichnet,
daß zum Betrieb des Kniehebels (12) ein Druckmittelzylinder dient.

10. Zwei-Platten-Spritzgießmaschine nach einem der Ansprüche 1 bis 6,
dadurch gekennzeichnet,
daß als Antriebsorgan mindestens ein Kurbeltrieb (12') vorgesehen ist, wobei die Kurbelelemente eine Ebene aufspannen, die im wesentlichen mit der Zugstangen-Joch-Ebene zusammenfällt.

11. Zwei-Platten-Spritzgießmaschine nach einem der Ansprüche 1 bis 6,
dadurch gekennzeichnet,
daß als Antriebsorgan mindestens ein Druckmittelzylinder (12") vorgesehen ist.

12. Zwei-Platten-Spritzgießmaschine nach Anspruch 11,
dadurch gekennzeichnet,
daß zwei parallel zueinander in der Zugstangen-Joch-Ebene angeordnete Druckmittelzylinder (12") vorgesehen sind.

## Claims

1. A two-plate injection moulding machine (1) having a movable and a fixed mould clamping plate (3, 2), a drive for the closing movement and for applying the necessary closing force, having two tension rods (8, 9) which are arranged mutually parallel in a horizontal plane below the mould space, which pass through the mould clamping plates (2, 3) and for which one of the plates serves as a point of application for transmitting the tensile force, as well as two pressure rods (14, 15) arranged below the tension rods between the plates, characterized in that the drive is arranged on the injection side of the machine (1) and has a yoke (11) which guides and mutually connects the ends of the tension rods and serves as an abutment for at least one drive member (12, 12', 12") which is arranged and operates within the plane extending through the tension rods (8, 9) and the yoke (11) and acts on the adjacent mould clamping plate (2), the yoke (11) being adjustable relative to the tension rods (8, 9) in the axial direction thereof.

2. A two-plate injection moulding machine according to Claim 1, characterized in that the tension rods (8, 9) are constructed as spindles at least at their yoke-side ends, and the means for guiding the rods through the yoke (11) serve as threaded nuts for the spindles.

3. A two-plate injection moulding machine according to Claim 1 or 2, characterized in that the pressure rods (14, 15) pass through one of the mould clamping plates (3) by means of their ends (16), these ends (16) being constructed as spindles and threaded nuts (17) for those ends (16) of the rods (14, 15) which are constructed as spindles being provided on this mould clamping plate (3) .

4. A two-plate injection moulding machine according to one of Claims 1 to 3, characterized in that both the tension rods (8, 9) and the pressure rods (14, 15) may be rotated in each case mutually synchronously about their longitudinal axis.

5. A two-plate injection moulding machine according to Claim 4, characterized in that each rod pair (8, 9, 14, 15) may be rotated by way of a chain drive.

6. A two-plate injection moulding machine according to Claim 5, characterized in that the chain drive may be operated by means of an electric servomotor.

7. A two-plate injection moulding machine according to one of Claims 1 to 6, characterized in that the drive member is a double toggle lever (12).

8. A two-plate injection moulding machine according to Claim 7, characterized in that an electric-motor driven spindle (13) serves to operate the toggle lever.

9. A two-plate injection moulding machine according to Claim 7, characterized in that a compressed-medium cylinder serves to operate the toggle lever (12).

10. A two-plate injection moulding machine according to one of Claims 1 to 6, characterized in that at least one crank mechanism (12') is provided as the drive member, the crank elements extending over a plane which coincides substantially with the plane of the tension rods and yoke.

11. A two-plate injection moulding machine according to one of Claims 1 to 6, characterized in that at least one compressed-medium cylinder (12") is provided as the drive member.

12. A two-plate injection moulding machine according to Claim 11, characterized in that two compressed-medium cylinders (12") arranged mutually parallel in the plane of the tension rods and yoke are provided.

## Revendications

1. Machine de moulage par injection à deux plateaux (1) avec des plateaux de montage de moule mobile et fixe (3, 2), un moyen d'entraînement pour opérer le mouvement de fermeture et pour exercer la force de fermeture requise, avec deux barres de traction (8, 9) qui sont disposées parallèlement l'une à l'autre dans un plan horizontal au-dessous de l'espace de montage du moule, qui traversent les plateaux de montage de moule (2, 3) et auxquelles un des plateaux sert de point d'attaque pour transmettre la force de traction, ainsi qu'avec deux barres de poussée (14, 15) disposées au-dessous des barres de traction entre les plateaux, caractérisée en ce que le moyen d'entraînement est disposé sur le côté injection de la machine (1) et comporte un étrier (11) qui guide et relie entre elles les extrémités des barres de traction et qui sert de contre-appui à au moins un organe d'entraînement (12, 12', 12") qui agit et est disposé à l'intérieur du plan défini par les barres de traction (8, 9) et l'étrier (11) et qui produit son effet sur le plateau de montage de moule voisin, l'étrier (11) étant mobile par rapport aux barres de traction (8, 9) dans la direction axiale de celles-ci.

2. Machine de moulage par injection à deux plateaux selon la revendication 1, caractérisée en ce que, au moins à leurs extrémités côté étrier, les barres de traction (8, 9) sont configurées en tiges filetées et les passages de barres dans l'étrier (11) servent d'écrous pour les tiges filetées.

3. Machine de moulage par injection à deux plateaux selon la revendication 1 ou 2, caractérisée en ce que les barres de poussée (14, 15) traversent l'un des plateaux de montage de moule (3) avec l'une de leurs extrémités (16), lesdites extrémités (16) étant configurées en tiges filetées, et des écrous (17) pour les extrémités (16) des barres (14, 15) configurées en tiges filetées étant prévus sur ledit plateau de montage de moule (3).

4. Machine de moulage par injection à deux plateaux selon l'une des revendications 1 à 3, caractérisée en ce qu'aussi bien les barres de traction (8, 9) que les barres de poussée (14, 15) peuvent tourner autour de leur axe longitudinal respectif de manière synchrone les unes avec les autres.

5. Machine de moulage par injection à deux plateaux selon la revendication 4, caractérisée en ce que chaque paire de barres (8, 9, 14, 15) peut être mise en rotation à l'aide d'un moyen d'entraînement à chaîne.

6. Machine de moulage par injection à deux plateaux selon la revendication 5, caractérisée en ce que le moyen d'entraînement à chaîne peut être actionné à l'aide d'un actionneur électrique.

7. Machine de moulage par injection à deux plateaux selon l'une des revendications 1 à 6, caractérisée en ce que l'organe d'entraînement est une double genouillère (12).

8. Machine de moulage par injection à deux plateaux selon la revendication 7, caractérisée en ce qu'une tige filetée (13) entraînée par un moteur électrique sert à actionner la genouillère.

9. Machine de moulage par injection à deux plateaux selon la revendication 7, caractérisée en ce qu'un vérin hydraulique sert à actionner la genouillère (12).

10. Machine de moulage par injection à deux plateaux selon l'une des revendications 1 à 6, caractérisée en ce que l'organe d'entraînement prévu est au moins un moyen d'entraînement à manivelle (12'), les éléments de manivelle définissant un plan qui coïncide pour l'essentiel avec celui défini par les barres de traction et l'étrier.

11. Machine de moulage par injection à deux plateaux selon l'une des revendications 1 à 6, caractérisée en ce que l'organe d'entraînement prévu est au moins un vérin hydraulique (12").

12. Machine de moulage par injection à deux plateaux selon la revendication 11, caractérisée en ce qu'il est prévu deux vérins hydrauliques (12") disposés parallèlement l'un à l'autre dans le plan défini par les barres de traction et l'étrier.
